# EUROPEAN PATENT SPECIFICATION

(11) **EP 4 046 881 B1**
(45) Date of publication and mention of the grant of the patent: **24.01.2024**
(21) Application number: 22156437.0
(22) Date of filing: 11.02.2022
(51) Int. Cl.: B60S 5/06, H01M 50/256, B60L 53/80

(54) **A CARRYING MECHANISM FOR A BATTERY**
TRAGEMECHANISMUS
MÉCANISME DE SUPPORT

(30) Priority: 17.02.2021 TR 202102219
(43) Date of publication of application: 24.08.2022
(73) Proprietor: Ford Otomotiv Sanayi Anonim Sirketi, 34885 Sancaktepe/Istanbul (TR)
(72) Inventor: HACIOMEROGLU, IDRIS, ISTANBUL (TR); KURNAZ, GOKTAN, ISTANBUL (TR)
(74) Representative: Dericioglu, E. Korhan

(56) References cited:
- WO-A1-2020/194985
- CN-B- 109 050 765
- CN-U- 211 971 639
- US-A- 2 775 476
- US-A- 2 847 243
- US-A- 4 042 054
- US-A- 4 042 762
- US-A- 4 527 823
- US-A- 5 372 899

## Description

### Technical Field

The present invention relates to a carrying mechanism used, during replacement of batteries used in vehicles, to carry the battery or place it in a preferred position in the vehicle.

### Prior Art

The battery, which does not have a weight suitable for being carried ergonomically by people and poses a danger in case of falling, must be safely removed/installed. Batteries are generally used in vehicles. In case of need for technical service or replacing the battery of vehicles such as motorcycles, the battery needs to be removed and installed.

In the prior art systems, the carrying of batteries can be ensured by using human force. The said batteries have a weight in the range of 10-40 kg. In the current situation, occupational accidents may occur during the carrying and placement of the battery. If the battery, which contains hazardous chemicals and is classified as dangerous, is carried and placed by human force, fire may occur as a result of damage to the battery. In case the battery is carried or placed by human force, or if the battery falls, it may be the case that the employee is exposed to chemicals that will significantly affect his health.

Ergonomically, the maximum weight that a field worker can carry without support is 10 kg. Auxiliary equipment is required for weights above this. In addition, considering the need to carry the battery pack with precision, the battery installation, removal and replacement to/from the vehicle creates a big problem. In this case, there is a need for a carrying mechanism that ensures the carrying, lifting and placement of the said battery without using human power.

In the known status of the art, a battery carrying trolley is described in the Chinese utility model document numbered CN210258092 (U) and dated 09.05.2019. In this operation included in the said document, the carrying trolley with wheels has a handle and there is a counterweight thereon. The carrying and holding function of the battery is provided by the handle system. The battery is held by adjusting the distance with the movable arm and the fixed arm. The height adjustment of the apparatus is provided by a mechanism with a lever jack logic, using an engine. In the invention of the known status of the art, a mechanism is found with wheels and having a lever jack for height adjustment thereon. However, in the invention of the said document, the battery can be carried by being compressed by two handles. In the carrying mechanism of the invention, which is the subject of the application, a conveyor belt is passed around the battery and the said belt has two carrying arms. The two arms of the belt are passed to the carrying profile of the carrying trolley and the lifting profile to which the carrying profile is attached is moved on the vertical axis by working with the logic of a lever jack.

An easily serviceable motorcycle battery is detailed in the United States patent document numbered US2018151860 (A1) and priority dated 08.04.2015, which is in the state of the art. In this study, the motorcycle battery is packaged under the seat together with its closure. A carrying function is provided to use the entire assembly on two wheels. At the same time, the battery assembly, which is removed with a handle, can be carried by pulling. The invention of the known status of the art, is similar to the invention that is the subject of the application in terms of the advantage obtained by using a battery assembly with a pull arm and drag wheel in order to increase the ease of carrying and serviceability. However, the suspension mechanism and suspension belts in the carrying mechanism in the invention that is the subject of the application are not included in the invention in the state of the art.

In the German patent document number DE10201 111 1537 (A1) and priority dated 31.08.2011 of the known status of the art, a battery arrangement and a carrying trolley are described. A handle has been added to remove the battery placed on the vehicle floor in the invention in the said document. The carrying trolley includes a handle, and it can bring the battery taken thereon with wheels to the assembly area. The battery compartment is designed open from one side so that the battery can be driven from the side. The battery of the invention of the known status of the art is similar to the invention of the present application in terms of having carrying trolley wheels. However, the process of carrying the battery with a suspension-jack-like system in the carrying mechanism of the invention, which is the subject of the present application, differs from the invention in the state of the art. US 4 042 762 discloses a frame for hand carrying a battery.

The carrying mechanism of the invention, which is the subject of the present application, ensures the battery to be carried by working like a lever jack. In the carrying mechanism of the invention, which is the subject of the present application, carrying straps are fixed on the battery pack. At the top of these belts, there are holes for the carrying equipment to pass through. Velcro straps are fixed on the bottom of the battery so that these carrying straps at the top of the battery do not sit idle. The corresponding parts of these straps are fixed on the battery cover. In this way, it is fixed on the cover when not in use. The wheel area of the carrying stand is brought closer to the battery so that it passes under the vehicle. The battery carrying profile is passed through the battery carrying strap holes and the safety pin is attached. When the arm of the carrying stand is raised, the battery and the vehicle are disconnected and the stand starts to carry the battery. At the point where the battery exceeds the height of the vehicle, it is separated from the vehicle and the stand can be moved to the desired location.

In the state of the art, there is no explanation regarding the technical features and the technical effects provided by the invention of the present application. In the prior art applications, no carrying mechanism is found that ensures the carrying, lifting and placement operations of the said battery without using human power.

### Objects of the Invention

The object of the present invention is to realize a carrying mechanism that enables the battery to be carried or lifted without the use of human power.

Another object of the present invention is to realize a carrying mechanism that enables the battery to be placed by being immobile on the horizontal axis and being raised and lowered on the vertical axis.

Another object of the present invention is to realize a carrying mechanism that prevents the battery from being damaged during carriage by ensuring the battery to be carried in a balanced manner without the need for human power.

Another object of the present invention is to realize a carrying mechanism that enables the battery to be moved up and down on the vertical axis by means of the hanger-jack mechanism.

Another object of the present invention is to realize a carrying mechanism that ensures the protection of employee health by unmanned carrying of the battery.

### Brief Description of the Invention

A carrying mechanism, which is defined in the first claim and other claims dependent on this claim, realized in order to achieve the aim of the present invention, consists of a carrying strap and a carrier. In the carrying mechanism, the battery is first placed in the carrying strap. The battery is placed in the insertion clearance in the carrying strap. When the lower part of the battery is inserted into the insertion clearance, the containment belt wraps around the battery. While the containment belt wraps around the battery, the carrying belt remains at the end of the battery. In case the battery is stationary and not placed in a vehicle, the carrying belt can be fixed to the upper part of the battery with the strap stabilizer located at the belt tip of the carrying belt. In the case where the battery is to be placed in a vehicle, the carrying belt is extended over the two parallel sides of the battery. The battery, which is placed in the carrying strap, is passed from the carrying belt to the carrying arm of the carrier when it is preferred to be carried to the vehicle. The battery is passed from the support slot of the carrying belt to the carrying arm. When the battery is passed from the support slot of the carrying belt to the carrying arm, the carrying arm comes into contact with the carrying support in the support slot. When it is passed from the carrying strap found on the battery to the carrying arm with the carrying belt, it remains balanced. After the battery is placed on the carrying arm, a blocking pin is inserted into the blocking gap to prevent the battery from being separated from the carrying strap together with the carrying strap.

After fixing the battery in the carrying strap of the invention, the subject of the application allows the battery to be lifted on the vertical axis according to the size of the vehicle in which the carrier battery will be placed. The lifting profile, which is connected to the carrying arm, is opened upwards on the vertical axis by means of the motion provider. In case the lifting profile is closed, the second movable arm is in the first movable arm and the first movable arm is nested within the fixed arm. When the motion provider is rotated by the user about its central axis in one direction, the first movable arm moves in the vertical axis upwards within the fixed arm. When the first movable arm is completely removed from the fixed arm, the second movable arm moves upwards in the vertical axis within the first movable arm, as the motion provider is rotated in one direction around its central axis by the user. The plane to be placed is adjusted according to the size of the vehicle in which the battery will be placed, by rotating the motion provider in one direction or the other around its central axis by the user. After the position of the lifting profile is adjusted with the motion provider according to the plane where the battery will be placed, the carrier is brought closer to the vehicle by means of the carrying wheels on the carrying feet by applying force thereon. After the carrier is brought closer to the vehicle by means of the carrying wheels on the carrying leg, the position where the battery will be placed is selected and the motion provider is used again. In this case, the first movable arm moves in the vertical axis downwards within the fixed arm by rotating the motion provider in another direction around its central axis. When the first movable arm completely enters the fixed arm, the second movable arm moves into the first movable arm in the vertical axis downwards as the motion provider is rotated by the user around its central axis to another direction. Thus, the battery can be placed inside the vehicle or removed from the vehicle by moving it only in the vertical direction by means of the carrier.

### Detailed Description of the Invention

The carrying mechanism realized to achieve the aim of the present invention is shown in the attached figures, which are;

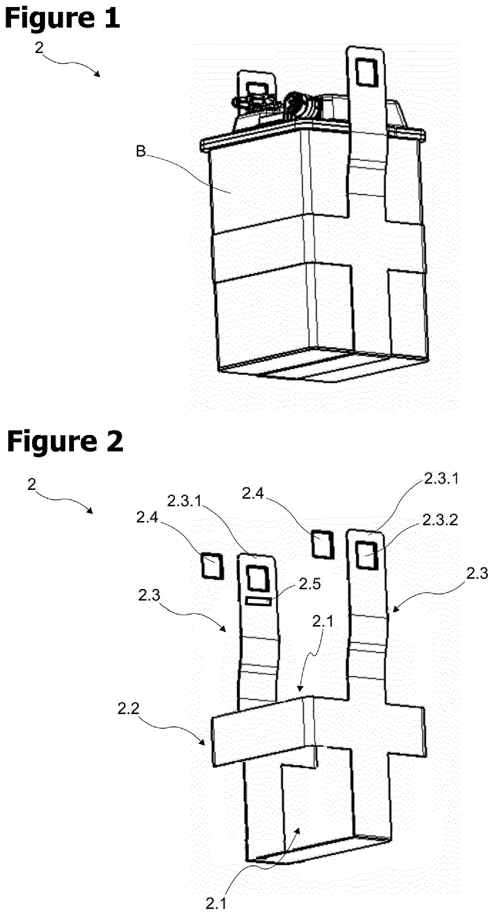

- **Figure 1.**: is a perspective view of the battery with its carrying strap.
- **Figure 2.**: is a perspective view of the carrying strap.
- **Figure 3.**: is a perspective view of the battery with its carrying strap from another angle.
- **Figure 4.**: is a perspective view of the battery's carrying strap with the carrying belt attached to the battery.

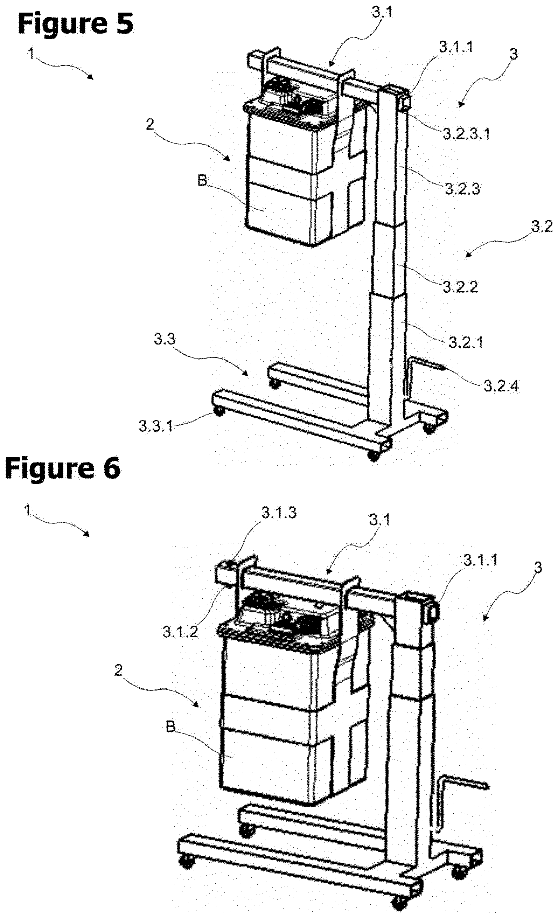

- **Figure 5.**: is a perspective view of the battery when the carrier is lifted up when placed on the carrying strap in the carrying mechanism.
- **Figure 6.**: is a perspective view of the battery in the carrying mechanism, when the carrier is placed on the carrying strap, when the carrier is lowered.

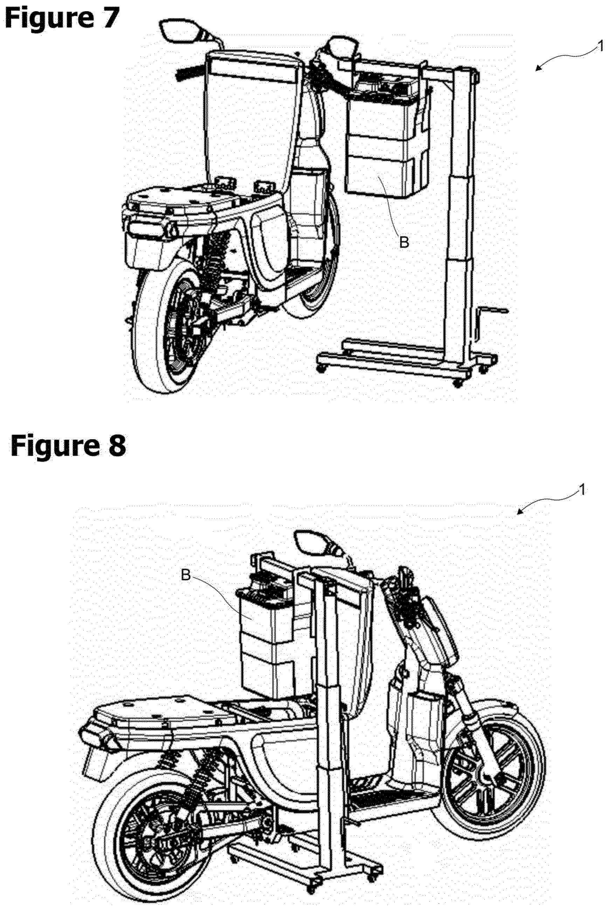

- **Figure 7.**: is a view of the battery placed in the carrying mechanism when it is being brought closer to the vehicle.
- **Figure 8.**: is a view of the battery placed in the carrying mechanism when it is brought closer to the vehicle.

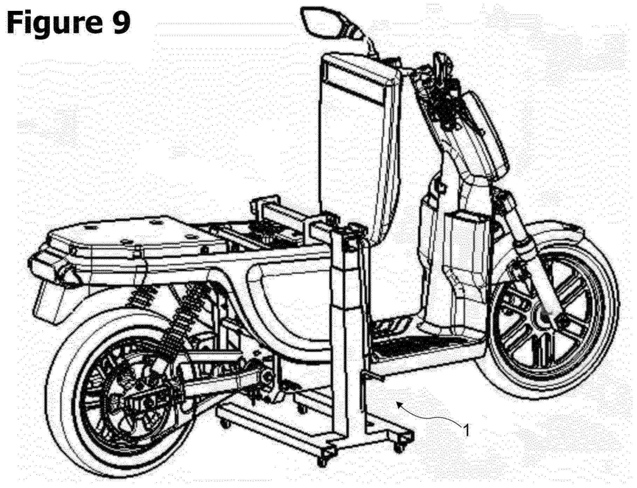

- **Figure 9.**: is a view of the battery placed in the carrying mechanism when it is lowered and placed in the vehicle.

The components given in the figures are enumerated individually, and the meanings of these numbers are given below.
**1.** Carrying mechanism
**2.** Carrying strap
   **2.1.** Insertion clearance
   **2.2.** Containment belt
   **2.3.** Carrying belt
      **2.3.1.** Belt tip
      **2.3.2.** Support slot
   **2.4.** Carrying support
   **2.5.** Strap stabilizer
**3.** Carrier
   **3.1.** Carrying arm
      **3.1.1.** Fixing tip
      **3.1.2.** Blocking clearance
      **3.1.3.** Blocking pin
   **3.2.** Lifting profile
      **3.2.1.** Fixed arm
      **3.2.2.** First movable arm
      **3.2.3.** Second movable arm
         **3.2.3.1.** Connection clearance
      **3.2.4.** Motion provider
   **3.3.** Carrying leg
      **3.3.1.** Carrying wheel

### B. Battery

A carrying mechanism (1) used to carry the battery or place it in the preferred position in the vehicle during replacement of batteries used in the vehicles, in its most basic form, comprises:
- at least one carrying strap (2),
   - in which the battery (B) is placed,
   - which surrounds and wraps around the battery (B),
   - which ensures the balancing of the weight distribution of the battery (B), and ensures that the battery (B) placed inside is fixed in the horizontal and vertical axes,
- at least one carrier (3) which comprises at least one carrying arm (3.1) and at least one lifting profile (3.2) connected to the carrying arm (3.1),
   - in which the carrying strap (2), where the battery (B) is placed, is inserted into the carrying arm (3.1),
   - which allows the carrying arm (3.1) to be moved up or down perpendicular to the ground by means of the lifting profile (3.2),
   - and which prevents the battery (B) attached to the carrying arm (3.1) from moving on the horizontal axis, and allows it to be moved up or down perpendicular to the ground via the lifting profile (3.2).

The carrying mechanism (1), which is the subject of the application, is used to carry the battery or to place it in the preferred position in the vehicle during the replacement of the batteries used in the vehicles. The carrying mechanism (1) includes the carrying strap (2) and the carrier (3). The carrying mechanism (1) enables the battery (B) to be carried or lifted without the need for human power. The carrying mechanism (1) ensures that the battery (B) is positioned by keeping it stable on the horizontal axis and lifting and lowering it on the vertical axis. The carrying mechanism (1) ensures that the battery (B) is carried in a balanced manner without the use of manpower, thus preventing the battery (B) from being damaged during carriage. The carrying mechanism (1) enables the battery (B) to be moved up and down on the vertical axis by means of the carrier (3). The carrying mechanism (1) ensures the protection of employee health by the unmanned carrying of the battery (B).

The carrying strap (2) in an embodiment of the invention ensures that the battery (B) is placed on the carrier (3). The battery (B) is placed inside the carrying strap (2). The carrying strap (2) surrounds the battery (B). The carrying strap (2) ensures that the weight distribution of the battery (B) is balanced. The carrying strap (2) ensures that the weight distribution is balanced during the carrying of the battery (B). The carrying strap (2) ensures that the battery (B) placed therein remains fixed on the horizontal and vertical axis. The carrying strap (2) comprises the insertion clearance (2.1), the containment belt (2.2), the carrying belt (2.3), the carrying support (2.4) and the strap stabilizer (2.5). The carrying strap (2) can preferably be manufactured from textiles or additives. The carrying strap (2) can be manufactured from different types of textile and additive elements, depending on the battery (B) it will carry. There is an insertion clearance (2.1) inside the carrying strap (2). When the battery (B) is placed in the insertion clearance (2.1), the carrying strap (2) helps the battery (B) to be carried by making the weight distribution of the battery (B) balanced. When the battery (B) is placed in the insertion clearance (2.1), the containment belt (2.2) wraps the body of the battery (B). The insertion clearance (2.1) is in dimensions to be placed in such a way that it is wrapped around the containment belt (2.2) of the battery (B) body. When the battery (B) is placed in the insertion clearance (2.1) in the carrying strap (2), the containment belt (2.2) wraps around the battery (B). When the battery (B) is placed in the insertion clearance (2.1), the carrying belt (2.3) is located on the upper part of the battery (B) body.

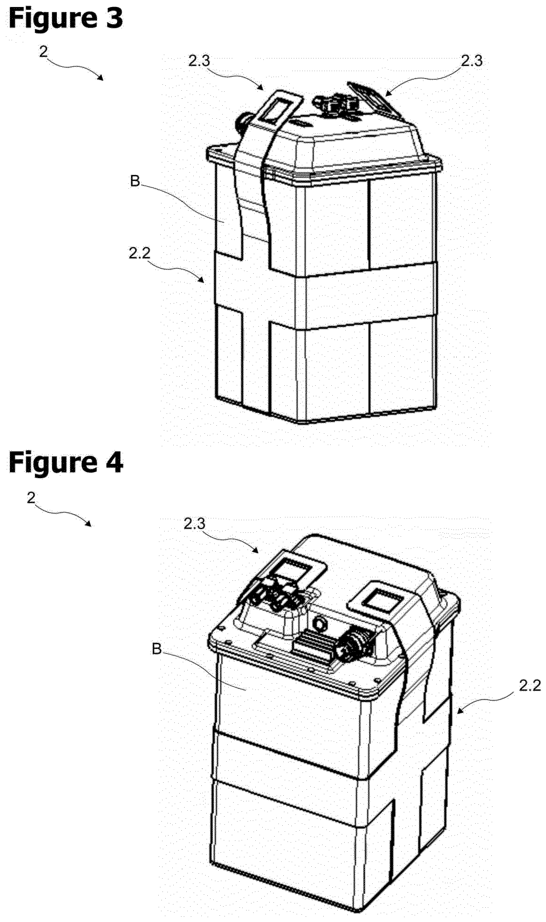

In an embodiment of the invention, the battery (B) is placed inside the carrying strap (2). The battery (B) is placed in the insertion clearance (2.1) in the carrying strap (2). When the lower part of the battery (B) is inserted into the insertion clearance (2.1), the containment belt (2.2) wraps around the battery (B). While the containment belt (B) wraps around the battery (B), the carrying belt (2.3) remains at the end part of the battery (B). In case the battery (B) is stationary and not placed in a vehicle, the carrying belt (2.3) can be fixed at the upper part of the battery (B) with the strap stabilizer (2.5) located at the belt tip (2.3.1) of the carrying belt (2.3) (Figure 4). In the case where the battery (B) is to be placed in a vehicle, the carrying belt (2.3) is extended over the two parallel edges of the battery (B).

In an embodiment of the invention, the carrying belt (2.3) located on the carrying strap (2) ensures that the battery (B) is placed on the carrying arm (3.1) on the carrier (3). The carrying belt (2.3) comprises the belt tip (2.3.1) and the support slot (2.3.2). The carrying belt (2.3) ensures that the weight of the battery (B) is balanced when it is placed on the carrying arm (3.1). When the battery (B) is placed in the insertion clearance (2.1), the carrying belt (2.3) hangs upwards from the two parallel edges of the battery (B). After the battery (B) is placed or not in use, the carrying belts (2.3) can be fixed on the battery (B) by means of strap stabilizers (2.5). The carrying belts (2.3) are placed on the carrying arm (3.1) from the tips of the belts (2.3.1). A support slot (2.3.2) is found at the belt tips (2.3.1). The support slots (2.3.2) of the carrying belts (2.3) are attached to the carrying arm (3.1). In the case where the battery (B) is to be placed in a vehicle, the carrying belt (2.3) is extended over the two parallel edges of the battery (B). The battery (B), placed on the carrying strap (2), is passed from the carrying belt (2.3) to the carrying arm (3.1) of the carrier (3) when it is preferred to be carried to the vehicle. The battery (B) is passed from the support slot (2.3.2) of the carrying belt (2.3) to the carrying arm (3.1). When the battery (B) is passed from the support slot (2.3.2) of the carrying belt (2.3) to the carrying arm (3.1), the carrying arm (3.1) contacts the carrying support (2.4) located in the support slot (2.3.2). When it is passed from the carrying strap (2) found on the battery (B) to the carrying arm (3.1) with the carrying belt (2.3), it remains balanced. The carrying support (2.4) is placed in the support slots (2.3.2) in the carrying belts (2.3).

The carrying support (2.4) of the invention, which is the subject of the application, prevents the carrying belts (2.3) from being damaged if they are placed on the carrying arm (3.1). The carrying support (2.4) is inserted into the support slot (2.3.2) in the carrier belts (2.3). The carrying support (2.4) is preferably manufactured in metal or steel form. The carrying support (2.4) is preferably in a rectangular geometric form. The carrying support (2.4) is in the same geometric form as the support slot (2.3.2). The carrying support (2.4) prevents the carrying strap (2) from being damaged during the carrying of the battery (B) together with the carrying strap (2). The carrying support (2.4) ensures that the weight of the battery (B) is distributed evenly on the carrying straps (2.3) while being carried with the carrying strap (2). Thanks to its rectangular geometric form, the carrying support (2.4) prevents the battery (B) it carries from oscillating while being carried.

In the invention according to the present application, in case the battery (B) is stationary and not placed in a vehicle, the carrying belt (2.3) can be fixed at the upper part of the battery (B) with the strap stabilizer (2.5) located at the belt tip (2.3.1) of the carrying belt (2.3) (Figure 4). The strap stabilizer (2.5) preferably has a hook-and-loop fastening feature. The part to which the strap stabilizer (2.5) is affixed is preferably located on the upper surface of the battery (B). The function of the strap stabilizer (2.5) ensures that the carrying strap (2) is stationary while the battery (B) is performing the operation.

The carrier (3) in an embodiment of the invention enables the battery (B) to move. The carrier (3) comprises the carrying arm (3.1), the lifting profile (3.2) and the carrying foot (3.3). The carrier (3) is the part in which the carrying strap (2), in which the battery (B) is placed, is inserted into the carrying arm (3.1). The carrier (3) enables the carrying arm (3.1) to be moved up or down perpendicular to the ground by means of the lifting profile (3.2). The carrier (3) prevents the battery (B) attached to the carrying arm (3.1) from moving on the horizontal axis, and enables it to be moved up or down perpendicular to the ground via the lifting profile (3.2).

In an embodiment of the invention, the carrying arm (3.1) located on the carrier (3) ensures that the battery (B) remains fixed and balanced by means of the carrying strap (2). It comprises the carrying arm (3.1), the fixing tip (3.1.1), the blocking clearance (3.1.2) and the blocking pin (3.1.3). After the battery (B) is placed on the carrying arm (3.1), the blocking pin (3.1.3) is inserted into the blocking clearance (3.1.2) in order to prevent the battery (B) from being separated from the carrying strap (2) together with the carrying arm (3.1). The fixing tip (3.1.1) of the carrying arm (3.1) ensures that the carrying arm (3.1) is fixed to the lifting profile (3.2). The blocking pin (3.1.3) is designed to prevent the carrying arm (3.1) from coming off after it passes through the carrying strap (2).

In an embodiment of the invention, the lifting profile (3.2) on the carrier (3) preferably works with the logic of a lever jack. The lifting profile (3.2) comprises the fixed arm (3.2.1), the first movable arm (3.2.2), the second movable arm (3.2.3) and the motion provider (3.2.4). The lifting profile (3.2), which is connected to the carrying arm (3.1), is opened upwards on the vertical axis by means of the motion provider (3.2.4). In case the lifting profile (3.2) is closed, the second movable arm (3.2.3) is in the first movable arm (3.2.2) and the first movable arm (3.2.2) is nested inside the fixed arm (3.2.1). When the motion provider (3.2.4) is rotated in one direction around its central axis by the user, the first movable arm (3.2.2) moves in the vertical axis upwards within the fixed arm (3.2.1). When the first movable arm (3.2.2) is completely removed from the fixed arm (3.2.1), as the motion provider (3.2.4) is rotated by the user around its central axis in one direction, the second movable arm (3.2.3) is moved in upward direction on the vertical axis within the first movable arm (3.2.2). The motion provider (3.2.4) is rotated by the user around its central axis in one direction or the other, and the plane to be placed is adjusted according to the size of the vehicle in which the battery (B) will be placed. After the position of the lifting profile (3.2) is adjusted with the motion provider (3.2.4) according to the plane where the battery (B) will be placed, the carrier (3) is brought closer to the vehicle by means of the carrying wheels (3.3.1) on the carrier foot (3.3) by applying force thereon. After the carrier (3) is brought closer to the vehicle by means of the carrying wheels (3.3.1) on the carrier foot (3.3), the position where the battery (B) will be placed is selected and the motion provider (3.2.4) is used again. In this case, the motion provider (3.2.4) is rotated around its central axis in another direction, and the first movable arm (3.2.2) moves down the vertical axis within the fixed arm (3.2.1). When the first movable arm (3.2.2) is completely inserted into the fixed arm (3.2.1), as the motion provider (3.2.4) is rotated by the user around its central axis in the other direction, the second movable arm (3.2.3) is moved in downward direction on the vertical axis within the first movable arm (3.2.2). Thus, the battery (B) can be placed into or removed from the vehicle by moving it only in the vertical direction by means of the carrier (3).

In an embodiment of the invention, the carrying leg (3.3) located on the carrier (3) enables the battery (B) to be carried from one place to another. The carrying leg (3.3) comprises the carrying wheel (3.3.1). A lifting profile (3.2) is found at one end of the carrying leg (3.3). The free part of the carrying leg (3.3) can get under a vehicle or a material. In this application of the invention, there can be more than one carrying wheel (3.3.1). In this application of the invention, there are preferably four carrying wheels (3.3.1) on the carrying leg (3.3), which can rotate 360 degrees at each corner.

In the invention, which is the subject of the application, when the battery (B) package in the vehicle needs to be removed, the "carrying straps (2)" are separated from the strap stabilizers (2.5) after the vehicle seat is opened. Then the carrier (3) is brought to the side of the vehicle with the help of the carrying wheels (3.3.1). The ones in front of the carrying wheels (3.3.1) of the carrier (3) are slid towards the bottom of the vehicle. Meanwhile, the carrying arm (3.1) is passed through the support slots (2.3.2) of the carrying strap (2). Then, the blocking pin (3.1.3) is inserted into the blocking clearance (3.1.2) to prevent the holding straps (2) from coming out of the carrying arm (3.1). By making use of the motion provider (3.2.4) in the carrier (3) the first movable arm (3.2.2) and the second movable arm (3.2.3), which are nested in the fixed arm (3.2.1) in the lifting profile (3.2), are provided to move upwards in the vertical axis. Thus, the process of removing the battery (B) located in the carrying straps (2) begins. After the lower point of the battery (B) is separated from the upper point of the vehicle on the vertical axis, the lifting process of the lifting profile (3.2) stops and the battery (B) is carried to the desired location by the rotating the carrying wheels (3.3.1) under the carrier (3). Then, in order to lower the battery (B), the lifting profile (3.2) is moved downwards by means of the motion provider (3.2.4) on the vertical axis of the first movable arm (3.2.2) and the second movable arm (3.2.3), which are nested in the fixed arm (3.2.1). The battery (B) is lowered towards the vehicle in the preferred position. The blocking pin (3.1.3) is removed from the blocking clearance (3.1.2). The carrying arm (3.1) is slowly pulled back and removed from the carrying belt (2.3) of the carrying strap (2). Then, the strap stabilizers (2.5) on the carrying belt (2.3) of the carrying straps (2) are fixed to the Velcro straps on the battery (B) cover. In this way, the carrying straps (2.3) of the carrying strap (2) are prevented from making noise and hitting the surrounding parts by standing idle.

In another embodiment of the invention, this portable carrying mechanism (1) can be carried in the luggage compartments of light commercial vehicles by reducing the lifting profile (3.2) when not in use. In this way, it can be carried for replacing the batteries (B) of vehicles that require battery replacement due to a dead battery, technical problems etc. reasons.

In the carrying mechanism (1) of the invention, which is the subject of the application, first of all, the battery (B) is placed inside the carrying strap (2). The battery (B) is placed in the insertion clearance (2.1) in the carrying strap (2). When the lower part of the battery (B) is inserted into the insertion clearance (2.1), the containment belt (2.2) wraps around the battery (B). While the containment belt (B) wraps around the battery (B), the carrying belt (2.3) remains at the end part of the battery (B). In case the battery (B) is stationary and not placed in a vehicle, the carrying belt (2.3) can be fixed at the upper part of the battery (B) with the strap stabilizer (2.5) located at the belt tip (2.3.1) of the carrying belt (2.3) (Figure 4). In the case where the battery (B) is to be placed in a vehicle, the carrying belt (2.3) is extended over the two parallel edges of the battery (B). The battery (B), placed on the carrying strap (2), is passed from the carrying belt (2.3) to the carrying arm (3.1) of the carrier (3) when it is preferred to be carried to the vehicle. The battery (B) is passed from the support slot (2.3.2) of the carrying belt (2.3) to the carrying arm (3.1). When the battery (B) is passed from the support slot (2.3.2) of the carrying belt (2.3) to the carrying arm (3.1), the carrying arm (3.1) contacts the carrying support (2.4) located in the support slot (2.3.2). When it is passed from the carrying strap (2) found on the battery (B) to the carrying arm (3.1) with the carrying belt (2.3), it remains balanced. After the battery (B) is placed on the carrying arm (3.1), the blocking pin (3.1.3) is inserted into the blocking clearance (3.1.2) in order to prevent the battery (B) from being separated from the carrying strap (2) together with the carrying arm (3.1).

After the battery (B) is fixed in the carrying strap (2) of the invention, which is the subject of the application, the carrier (3) enables the battery (B) to be lifted on the vertical axis according to the size of the vehicle where the battery (B) will be placed. The lifting profile (3.2), which is connected to the carrying arm (3.1), is opened upwards on the vertical axis by means of the motion provider (3.2.4). In case the lifting profile (3.2) is closed, the second movable arm (3.2.3) is in the first movable arm (3.2.2) and the first movable arm (3.2.2) is nested inside the fixed arm (3.2.1). When the motion provider (3.2.4) is rotated in one direction around its central axis by the user, the first movable arm (3.2.2) moves in the vertical axis upwards within the fixed arm (3.2.1). When the first movable arm (3.2.2) is completely removed from the fixed arm (3.2.1), as the motion provider (3.2.4) is rotated by the user around its central axis in one direction, the second movable arm (3.2.3) is moved in upward direction on the vertical axis within the first movable arm (3.2.2). The motion provider (3.2.4) is rotated by the user around its central axis in one direction or the other, and the plane to be placed is adjusted according to the size of the vehicle in which the battery (B) will be placed. After the position of the lifting profile (3.2) is adjusted with the motion provider (3.2.4) according to the plane where the battery (B) will be placed, the carrier (3) is brought closer to the vehicle by means of the carrying wheels (3.3.1) on the carrier foot (3.3) by applying force thereon. After the carrier (3) is brought closer to the vehicle by means of the carrying wheels (3.3.1) on the carrier foot (3.3), the position where the battery (B) will be placed is selected and the motion provider (3.2.4) is used again. In this case, the motion provider (3.2.4) is rotated around its central axis in another direction, and the first movable arm (3.2.2) moves down the vertical axis within the fixed arm (3.2.1). When the first movable arm (3.2.2) is completely inserted into the fixed arm (3.2.1), as the motion provider (3.2.4) is rotated by the user around its central axis in the other direction, the second movable arm (3.2.3) is moved in downward direction on the vertical axis within the first movable arm (3.2.2). Thus, the battery (B) can be placed into or removed from the vehicle by moving it only in the vertical direction by means of the carrier (3).

The use of the carrying mechanism (1) in this embodiment of the invention is carried out as follows. In the carrying mechanism (1), first of all, the battery (B) is placed inside the carrying strap (2). The battery (B) is placed in the insertion clearance (2.1) in the carrying strap (2). When the lower part of the battery (B) is inserted into the insertion clearance (2.1), the containment belt (2.2) wraps around the battery (B). While the containment belt (B) wraps around the battery (B), the carrying belt (2.3) remains at the end part of the battery (B). In case the battery (B) is stationary and not placed in a vehicle, the carrying belt (2.3) can be fixed at the upper part of the battery (B) with the strap stabilizer (2.5) located at the belt tip (2.3.1) of the carrying belt (2.3) (Figure 4). In the case where the battery (B) is to be placed in a vehicle, the carrying belt (2.3) is extended over the two parallel edges of the battery (B). The battery (B), placed on the carrying strap (2), is passed from the carrying belt (2.3) to the carrying arm (3.1) of the carrier (3) when it is preferred to be carried to the vehicle. The battery (B) is passed from the support slot (2.3.2) of the carrying belt (2.3) to the carrying arm (3.1). When the battery (B) is passed from the support slot (2.3.2) of the carrying belt (2.3) to the carrying arm (3.1), the carrying arm (3.1) contacts the carrying support (2.4) located in the support slot (2.3.2). When it is passed from the carrying strap (2) found on the battery (B) to the carrying arm (3.1) with the carrying belt (2.3), it remains balanced. After the battery (B) is placed on the carrying arm (3.1), the blocking pin (3.1.3) is inserted into the blocking clearance (3.1.2) in order to prevent the battery (B) from being separated from the carrying strap (2) together with the carrying arm (3.1). After the battery (B) is fixed in the carrying strap (2), the carrier (3) enables the battery (B) to be lifted on the vertical axis according to the size of the vehicle where the battery (B) will be placed. The lifting profile (3.2), which is connected to the carrying arm (3.1), is opened upwards on the vertical axis by means of the motion provider (3.2.4). In case the lifting profile (3.2) is closed, the second movable arm (3.2.3) is in the first movable arm (3.2.2) and the first movable arm (3.2.2) is nested inside the fixed arm (3.2.1). When the motion provider (3.2.4) is rotated in one direction around its central axis by the user, the first movable arm (3.2.2) moves in the vertical axis upwards within the fixed arm (3.2.1). When the first movable arm (3.2.2) is completely removed from the fixed arm (3.2.1), as the motion provider (3.2.4) is rotated by the user around its central axis in one direction, the second movable arm (3.2.3) is moved in upward direction on the vertical axis within the first movable arm (3.2.2). The motion provider (3.2.4) is rotated by the user around its central axis in one direction or the other, and the plane to be placed is adjusted according to the size of the vehicle in which the battery (B) will be placed. After the position of the lifting profile (3.2) is adjusted with the motion provider (3.2.4) according to the plane where the battery (B) will be placed, the carrier (3) is brought closer to the vehicle by means of the carrying wheels (3.3.1) on the carrier foot (3.3) by applying force thereon. After the carrier (3) is brought closer to the vehicle by means of the carrying wheels (3.3.1) on the carrier foot (3.3), the position where the battery (B) will be placed is selected and the motion provider (3.2.4) is used again. In this case, the motion provider (3.2.4) is rotated around its central axis in another direction, and the first movable arm (3.2.2) moves down the vertical axis within the fixed arm (3.2.1). When the first movable arm (3.2.2) is completely inserted into the fixed arm (3.2.1), as the motion provider (3.2.4) is rotated by the user around its central axis in the other direction, the second movable arm (3.2.3) is moved in downward direction on the vertical axis within the first movable arm (3.2.2). Thus, the battery (B) can be placed into or removed from the vehicle by moving it only in the vertical direction by means of the carrier (3).

## Claims

1. A carrying mechanism (1) used to carry a battery or place it in a preferred position in a vehicle during replacement of batteries used in vehicles comprising,
- at least one carrying strap (2),
• in which the battery (B) is placed,
• which surrounds and wraps around the battery (B),
• which ensures that the battery (B) placed therein is fixed in the horizontal and vertical axes,
• which comprises an insertion clearance (2.1), a containment belt (2.2), a carrying belt (2.3), a carrying support (2.4), and a strap stabilizer (2.5), and ensuring the battery (B) to be placed on the carrier (3),
• which has a containment belt (2.2) wrapping the body of the battery (B) when the battery (B) is placed in the insertion clearance (2.1), and the insertion clearance (2.1) having a size to be placed in such a way that the battery (B) body is wrapped by the containment belt (2.2),
- at least one carrier (3) which comprises at least one carrying arm (3.1) and at least one lifting profile (3.2) connected to the carrying arm (3.1),
• on which the carrying strap (2), where the battery (B) is placed, is attached to the carrying arm (3.1),
• which allows the carrying arm (3.1) to be moved by means of the lifting profile (3.2),
• and which prevents the battery (B) attached to the carrying arm (3.1) from moving on the horizontal axis, and allows it to be moved via the lifting profile (3.2).

2. The carrying mechanism (1) according to claim 1, **characterized by** a carrying strap (2) made of different types of textile and additives according to the battery (B) it will carry, and helping in carrying of the battery (B) by making the weight distribution of the battery (B) evenly when the battery (B) is placed in the insertion clearance (2.1).

3. The carrying mechanism (1) according to claim 1, **characterized by** a carrying belt (2.3) found on the upper part of the battery (B) body in a hanging manner when the battery (B) is placed in the insertion clearance (2.1), and left at the end part of the battery (B) while the containment belt (B) is wrapped around the battery (B).

4. The carrying mechanism (1) according to claim 1, **characterized by** a carrying belt (2.3) extended over two parallel sides of the battery (B) when the battery (B) is to be placed in a vehicle, allowing the battery (B) to be placed on a carrying arm (3.1) on the carrier (3), and stabilizing the weight of the battery (B) when placed on the carrying arm (3.1).

5. The carrying mechanism (1) according to claim 1, **characterized by** a carrying support (2.4) manufactured in metal or steel form, inserted into the support slot (2.3.2) on the carrying belts (2.3), and preventing the carrying belts (2.3) from being damaged when they are placed on the carrying arm (3.1) and preventing the battery (B) it carries from oscillating during carrying thanks to its rectangular geometric form.

6. The carrying mechanism (1) according to claim 1, **characterized by** a carrying support (2.4) preventing the carrying strap (2) from being damaged while the battery (B) is being carried with the carrying strap (2), and ensuring that the weight is distributed evenly on the carrying belts (2.3) while the battery (B) is being carried with the carrying strap (2).

7. The carrying mechanism (1) according to claim 1, **characterized by** a carrier (3) comprising a carrying arm (3.1), a lifting profile (3.2) and a carrying foot (3.3), and ensuring movement of the battery (B).

8. The carrying mechanism (1) according to claim 7, **characterized by** a carrying arm (3.1) comprising a fixing tip (3.1.1), a blocking clearance (3.1.2), and a blocking pin (3.1.3), and ensuring that the battery (B) remains stable and balanced via the carrying strap (2).

9. The carrying mechanism (1) according to claim 8, **characterized by** a blocking pin (3.1.3) engaged with the blocking clearance (3.1.2) to prevent the battery (B) from being separated from the carrying arm (3.1) with the carrying strap (2), after the battery (B) is placed in the carrying arm (3.1).

10. The carrying mechanism (1) according to claim 7, **characterized by** a lifting profile (3.2) comprising a fixed arm (3.2.1), a first movable arm (3.2.2), a second movable arm (3.2.3), and a motion provider (3.2.4), being opened upwards on the vertical axis via the motion provider (3.2.4), and when closed, the second movable arm (3.2.3) being nested inside the first movable arm (3.2.2) and the first movable arm (3.2.2) being nested inside the fixed arm (3.2.1).

11. The carrying mechanism (1) according to claim 10, **characterized by** a first movable arm (3.2.2) moving upwards on the vertical axis inside the fixed arm (3.2.1) when the motion provider (3.2.4) is rotated in one direction around its center axis by the user, and when completely removed from the fixed arm (3.2.1), moving upwards on the vertical axis inside the second movable arm (3.2.3) when the motion provider (3.2.4) is rotated in one direction around its central axis by the user.

## Patentansprüche

1. Ein Tragevorrichtung (1), der dazu dient, eine Batterie zu tragen oder sie in einer bevorzugten Position in einem Fahrzeug während des Austauschs von in Fahrzeugen verwendeten Batterien anzuordnen, umfassend,
- mindestens einen Trageriemen (2),
• in dem die Batterie (B) angeordnet ist,
• der die Batterie (B) umgibt und umwickelt,
• der sicherstellt, dass die darin angeordnete Batterie (B) in einer horizontalen und vertikalen Achse fixiert ist,
• der einen Einführspalt (2.1), einen Auffanggurt (2.2), einen Tragegurt (2.3), eine Tragestütze (2.4) und einen Riemenstabilisator (2.5) umfasst und die Anbringung der Batterie (B) auf dem Träger (3) gewährleistet,
• der einen Auffanggurt (2.2) aufweist, der das Gehäuse der Batterie (B) umhüllt, wenn die Batterie (B) in den Einführspalt (2.1) eingeführt wird, und wobei der Einführspalt (2.1) so eine Größe aufweist, dass er derart anzuordnen ist, dass das Gehäuse der Batterie (B) von dem Auffanggurt (2.2) umhüllt wird,
- mindestens einen Träger (3), der mindestens einen Tragarm (3.1) und mindestens ein mit dem Tragarm (3.1) verbundenes Hubprofil (3.2) umfasst,
• an dem der Trageriemen (2), in dem die Batterie (B) angeordnet ist, am Tragarm (3.1) befestigt ist,
• der es ermöglicht, den Tragarm (3.1) mit Hilfe der Hubprofile (3.2) zu bewegen,
• und der es verhindert, dass sich die am Tragarm (3.1) angebrachte Batterie (B) auf der horizontalen Achse bewegt, und es ermöglicht, dass sie durch das Hubprofil (3.2) bewegt werden kann.

2. Tragevorrichtung (1) nach Anspruch 1, **gekennzeichnet durch** einen Trageriemen (2), der je nach der zu tragenden Batterie (B) aus verschiedenen Arten von Textilien und Zusatzstoffen hergestellt ist und das Tragen der Batterie (B) unterstützt, indem er eine gleichmäßige Gewichtsverteilung der Batterie (B) bewirkt, wenn die Batterie (B) in den Einführspalt (2.1) eingeführt wird.

3. Tragevorrichtung (1) nach Anspruch 1, **gekennzeichnet durch** einen Tragegurt (2.3), der sich hängend am oberen Gehäuseteil der Batterie (B) befindet, wenn die Batterie (B) in den Einführspalt (2.1) eingeführt wird, und am Endteil der Batterie (B) verbleibt, wenn der Auffanggurt (B) um die Batterie (B) gewickelt wird.

4. Tragevorrichtung (1) nach Anspruch 1, **gekennzeichnet durch** einen Tragegurt (2.3), der sich über zwei parallele Ränder der Batterie (B) erstreckt, wenn die Batterie (B) in einem Fahrzeug einzusetzen ist, und der es ermöglicht, die Batterie (B) auf einem Tragarm (3.1) am Träger (3) anzubringen, und das Gewicht der Batterie (B) stabilisiert, wenn sie auf dem Tragarm (3.1) angeordnet ist.

5. Tragevorrichtung (1) nach Anspruch 1, **gekennzeichnet durch** eine in Metall- oder Stahlform gefertigte Tragestütze (2.4), die in den Halteschlitz (2.3.2) an den Tragegurten (2.3) eingesetzt ist und verhindert, dass die Tragegurte (2.3) beschädigt werden, wenn sie auf den Tragarm (3.1) aufgesetzt werden, und die durch ihre rechteckige geometrische Form verhindert, dass die von ihr getragene Batterie (B) während des Tragens schwingt.

6. Tragevorrichtung (1) nach Anspruch 1, **gekennzeichnet durch** eine Tragestütze (2.4), die verhindert, dass der Trageriemen (2) beschädigt wird, während die Batterie (B) mit dem Trageriemen (2) getragen wird, und die sicherstellt, dass das Gewicht gleichmäßig auf den Trageriemen (2.3) verteilt wird, während die Batterie (B) mit dem Trageriemen (2) getragen wird.

7. Tragevorrichtung (1) nach Anspruch 1, **gekennzeichnet durch** einen Träger (3), der einen Tragarm (3.1), ein Hubprofil (3.2) und einen Tragfuß (3.3) umfasst und die Bewegung der Batterie (B) sicherstellt.

8. Tragevorrichtung (1) nach Anspruch 7, **gekennzeichnet durch** einen Tragarm (3.1), der eine Fixierspitze (3.1.1), einen Arretierspalt (3.1.2) und einen Arretierstift (3.1.3) umfasst und sicherstellt, dass die Batterie (B) mithilfe des Trageriemens (2) stabil und im Gleichgewicht bleibt.

9. Tragevorrichtung (1) nach Anspruch 8, **gekennzeichnet durch** einen Arretierstift (3.1.3), der in den Arretierspalt (3.1.2) eingreift, um zu verhindern, dass die Batterie (B) mit dem Trageriemen (2) vom Tragarm (3.1) getrennt wird, nachdem die Batterie (B) am Tragarm (3.1) angeordnet ist.

10. Tragevorrichtung (1) nach Anspruch 7, **gekennzeichnet durch** ein Hubprofil (3.2), das einen festen Arm (3.2.1), einen ersten beweglichen Arm (3.2.2), einen zweiten beweglichen Arm (3.2.3) und einen Bewegungsgeber (3.2.4) umfasst, wobei dieses Profil über den Bewegungsgeber (3.2.4) auf der vertikalen Achse nach oben geöffnet wird und wobei in geschlossenem Zustand der zweite bewegliche Arm (3.2.3) in den ersten beweglichen Arm (3.2.2) und der erste bewegliche Arm (3.2.2) in den festen Arm (3.2.1) eingesteckt wird.

11. Tragevorrichtung (1) nach Anspruch 10, **gekennzeichnet durch** einen ersten beweglichen Arm (3.2.2), der sich innerhalb des festen Arms (3.2.1) auf der vertikalen Achse nach oben bewegt, wenn der Bewegungsgeber (3.2.4) vom Bediener in einer Richtung um seine Mittelachse gedreht wird, und der sich, in einem vollständig vom festen Arm (3.2.1) gelösten Zusstand, innerhalb des zweiten beweglichen Arms (3.2.3) auf der vertikalen Achse nach oben bewegt, wenn der Bewegungsgeber (3.2.4) vom Bediener in einer Richtung um seine Mittelachse gedreht wird.

## Revendications

1. Mécanisme de transport (1) utilisé pour transporter une batterie ou la placer dans une position préférentielle dans un véhicule lors du remplacement des batteries utilisées dans les véhicules, comprenant :
- au moins une sangle de transport (2),
• dans laquelle est placée la batterie (B),
• qui entoure et enveloppe la batterie (B),
• qui garantit que la batterie (B) qui y est placée est fixée dans les axes horizontaux et verticaux,
• qui comprend un espace d'insertion (2.1), une ceinture de confinement (2.2), une ceinture de transport (2.3), un support de transport (2.4) et un stabilisateur de sangle (2.5), et qui assure le placement de la batterie (B) sur le support (3),
• qui comporte une ceinture de confinement (2.2) enveloppant le corps de la batterie (B) lorsque la batterie (B) est placée dans l'espace d'insertion (2.1), et l'espace d'insertion (2.1) ayant une taille permettant de placer le corps de la batterie (B) soit enveloppé par la ceinture de confinement (2.2),
- au moins un porteur (3) comprenant au moins un bras porteur (3.1) et au moins un profilé de levage (3.2) relié au bras porteur (3.1),
• sur lequel la sangle de transport (2), où la batterie (B) est placée, est fixée au bras porteur (3.1),
• qui permet de déplacer le bras porteur (3.1) à l'aide du profilé de levage (3.2),
• et qui empêche la batterie (B) fixée au bras porteur (3.1) de se déplacer sur l'axe horizontal et permet de la déplacer via le profilé de levage (3.2).

2. Le mécanisme de transport (1) selon la revendication 1, **caractérisé par** une sangle de transport (2) faite de différents types de textile et d'additifs en fonction de la batterie (B) qu'elle doit transporter, et aidant au transport de la batterie (B) en répartissant uniformément le poids de la batterie (B) lorsque la batterie (B) est placée dans l'espace d'insertion (2.1).

3. Le mécanisme de transport (1) selon la revendication 1, **caractérisé par** une ceinture de transport (2.3) située sur la partie supérieure du corps de la batterie (B) de manière suspendue lorsque la batterie (B) est placée dans l'espace d'insertion (2.1), et laissée à l'extrémité de la batterie (B) pendant que la ceinture de confinement (B) est enroulée autour de la batterie (B).

4. Le mécanisme de transport (1) selon la revendication 1, **caractérisé par** une ceinture de transport (2.3) étendue sur deux côtés parallèles de la batterie (B) lorsque la batterie (B) doit être placée dans un véhicule, permettant à la batterie (B) d'être placée sur un bras porteur (3.1) sur le support (3), et stabilisant le poids de la batterie (B) lorsqu'elle est placée sur le bras porteur (3.1).

5. Le mécanisme de transport (1) selon la revendication 1, **caractérisé par** un support de transport (2.4) fabriqué sous forme de métal ou d'acier, inséré dans la fente de support (2.3.2) sur les ceintures de transport (2.3), et empêchant les ceintures de transport (2.3) d'être endommagées lorsqu'elles sont placées sur le bras porteur (3.1) et empêchant la batterie (B) qu'il transporte d'osciller pendant le transport grâce à sa forme géométrique rectangulaire.

6. Le mécanisme de transport (1) selon la revendication 1, **caractérisé par** un support de transport (2.4) empêchant la sangle de transport (2) d'être endommagée lorsque la batterie (B) est transportée avec la sangle de transport (2), et garantissant que le poids est réparti uniformément sur les ceintures de transport (2.3) lorsque la batterie (B) est transportée avec la sangle de transport (2).

7. Le mécanisme de transport (1) selon la revendication 1, **caractérisé par** un support (3) qui comprend un bras porteur (3.1), un profilé de levage (3.2) et un pied porte-charge (3.3), et qui assure le mouvement de la batterie (B).

8. Le mécanisme de transport (1) selon la revendication 7, **caractérisé par** un bras porteur (3.1) comprenant une pointe de fixation (3.1.1), un jeu de blocage (3.1.2) et une goupille de blocage (3.1.3), et assurant que la batterie (B) reste stable et équilibrée par l'intermédiaire de la sangle de transport (2).

9. Le mécanisme de transport (1) selon la revendication 8, **caractérisé par** une goupille de blocage (3.1.3) engagée dans le jeu de blocage (3.1.2) pour empêcher la batterie (B) d'être séparée du bras porteur (3.1) avec la sangle de transport (2), après que la batterie (B) a été placée dans le bras porteur (3.1).

10. Le mécanisme de transport (1) selon la revendication 7, **caractérisé par** un profilé de levage (3.2) comprenant un bras fixe (3.2.1), un premier bras mobile (3.2.2), un deuxième bras mobile (3.2.3), et un fournisseur de mouvement (3.2.4), s'ouvrant vers le haut sur l'axe vertical par l'intermédiaire du fournisseur de mouvement (3.2.4) et, lorsqu'il est dosé, le second bras mobile (3.2.3) étant emboîté dans le premier bras mobile (3.2.2) et le premier bras mobile (3.2.2) étant emboîté dans le bras fixe (3.2.1).

11. Le mécanisme de transport (1) selon la revendication 10, **caractérisé par** un premier bras mobile (3.2.2) se déplaçant vers le haut sur l'axe vertical à l'intérieur du bras fixe (3.2.1) lorsque le fournisseur de mouvement (3.2.4) est tourné dans une direction autour de son axe central par l'utilisateur, et lorsqu'il est complètement retiré du bras fixe (3.2.1), se déplaçant vers le haut sur l'axe vertical à l'intérieur du deuxième bras mobile (3.2.3) lorsque le fournisseur de mouvement (3.2.4) est tourné dans une direction autour de son axe central par l'utilisateur.
